# FASCICULE DE BREVET EUROPEEN

(11) **EP 3 004 670 B1**
(45) Date de publication et mention de la délivrance du brevet: **22.03.2017**
(21) Numéro de dépôt: 14731813.3
(22) Date de dépôt: 03.06.2014
(51) Int. Cl.: F16C 7/06, F16C 7/02, F16C 7/00, B29C 65/54

(54) **BIELLE, SON PROCEDE DE FABRICATION ET STRUCTURE DE PLANCHER AERONAUTIQUE L'INCORPORANT**
STANGE, VERFAHREN ZUR HERSTELLUNG DAVON UND FLUGZEUGBODENSTRUKTUR DAMIT
ROD, METHOD FOR MANUFACTURING SAME AND AIRCRAFT FLOOR STRUCTURE INCLUDING SAME

(30) Priorité: 05.06.2013 FR 1355174
(43) Date de publication de la demande: 13.04.2016
(73) Titulaire: Hutchinson, 75008 Paris (FR)
(72) Inventeur: GODON, Michaël, 18350 NEUVY DE CLOCHER (FR); GONZALEZ-BAYON, Cristina, 60123 BONNEUIL EN VALOIS (FR); FLORENTZ, Bertrand, F-45200 Paucourt (FR); CIOLCZYK, Jean-Pierre, F-45200 Montargis (FR)
(74) Mandataire: Gevers & Orès
(86) Numéro de dépôt international: PCT/IB2014/061919
(87) Numéro de publication internationale: WO 2014/195868

(56) Documents cités:
- EP-A1- 0 365 391
- EP-A1- 2 266 788
- US-A- 4 841 801
- US-A1- 2008 118 303

## Description

La présente invention concerne une bielle, une structure de plancher aéronautique l'incorporant et un procédé de fabrication de cette bielle. L'invention s'applique d'une manière générale à une bielle adaptée à la reprise d'efforts majoritairement axiaux, en particulier mais non exclusivement dans le domaine aéronautique, cette bielle pouvant être avantageusement structurale et pouvant être fabriquée en matériaux composites.

Les bielles composites actuelles de reprise d'efforts axiaux présentent usuellement une forme allongée avec un corps principal central muni de deux têtes à embouts évasés se terminant respectivement par des extrémités de connexion à des structures générant notamment des efforts axiaux de traction-compression, la connexion étant typiquement réalisée par des axes de liaison respectivement montés à travers ces extrémités.

Le document WO-A1-2010/024994 présente une telle bielle dont le corps composite est assemblé par collage aux embouts de ses têtes de connexion, par l'intermédiaire d'inserts annulaires recouvrant les extrémités du corps et recouverts par ces embouts.

Les bielles décrites dans ce document présentent l'inconvénient de présenter une masse et un coût de fabrication relativement élevés, notamment en raison des inserts requis pour leur assemblage.

De manière plus générale, un inconvénient majeur des bielles composites connues à ce jour réside dans leur masse élevée qui est liée, d'une part, au procédé de transformation utilisé, typiquement un moulage par transfert de résine (« RTM » pour « Resin Transfer Molding ») ou un moulage de pré-imprégnés par compression au moyen d'une vessie et, d'autre part, au renforcement de ces bielles pour leur conférer une tenue suffisante aux impacts et aux défauts de fabrication éventuels, car la tolérance à l'endommagement et aux défauts de fabrication est une caractéristique spécifiquement requise pour les pièces en composite.
On peut aussi se référer à US 4 841 801 qui divulgue une bielle selon le préambule de la revendication 1.

Un but de la présente invention est de proposer une bielle remédiant aux inconvénients précités, qui comprend un corps tubulaire à deux extrémités et deux têtes de connexion de ces extrémités à des structures adjacentes et qui est adaptée à une reprise d'efforts majoritairement axiaux (i.e. des efforts de traction-compression) générés par ces structures, chaque tête comprenant un embout évasé vers le corps et collé sur ce dernier en une interface de collage.

A cet effet, une bielle selon l'invention comprend au moins un premier joint d'étanchéité monté radialement entre et contre le corps et l'embout de chaque tête, axialement vers l'intérieur de l'interface de collage.

Par les expressions mentionnant qu'un premier élément d'une bielle de l'invention est situé « axialement vers/ à l'intérieur » ou « axialement vers/ à l'extérieur » d'un second élément de cette bielle, on entend de manière usuelle dans la présente description que ce premier élément est situé, en se référant à l'axe longitudinal de symétrie du corps de bielle, vers l'intérieur ou vers l'extérieur de ce corps (i.e. vers le centre de ce corps où vers les têtes), respectivement.

On notera que ce premier joint permet notamment d'assurer un jeu radial constant et équilibré et un calage également radial en positionnement du corps de bielle par rapport aux têtes de connexion, ainsi que l'étanchéité lors du collage comme cela sera exposé ci-dessous.

Selon une autre caractéristique de l'invention, ledit premier joint, annulaire et de préférence torique, peut être monté dans une première gorge formée en une extrémité axialement interne de chaque embout.

On notera que les bielles selon l'invention peuvent être avantageusement assemblées sans vissage des embouts sur le corps, et sans insert annulaire intermédiaire entre le corps et chaque embout qui est ainsi directement collé sur ce corps, contrairement au document précité.

Selon une autre caractéristique préférentielle de l'invention, chaque embout comprend une portion évasée globalement tronconique prolongée axialement vers l'intérieur par une portion axiale globalement cylindrique, la bielle incorporant, axialement vers l'extérieur dudit premier joint, des moyens d'injection et/ou d'aspiration d'une colle qui sont aptes à former ladite interface de collage sur la portion axiale de chaque embout, cette colle présentant une viscosité à 25° C de préférence inférieure ou égale à 10 Pa.s (par exemple de l'ordre de 1 Pa.s).

On notera que ce premier joint torique permet d'assurer l'étanchéité de l'assemblage corps - têtes lors de l'aspiration, de préférence mise en oeuvre par tirage sous vide, et également de contrôler la quantité optimale et l'épaisseur de colle dans l'interface de collage, qui peut être avantageusement comprise entre 0,1 mm et 0,5 mm.

On notera également que ce premier joint torique permet de protéger la colle contre le vieillissement dû aux fluides environnants (e.g. condensats, eau, aspersions de liquides hydrauliques tels que des esters phosphatés de type « Skydrol »), lors de la durée d'utilisation de la bielle en fonctionnement.

A titre exemplatif et nullement limitatif, cette colle peut être de type résine époxy bi-composants réticulable à température ambiante ou thermo-activable, étant précisé que d'autres colles par exemple bi-composants réticulables à température ambiante ou thermo-activables sont utilisables pourvu qu'elles présentent cette viscosité réduite.

De préférence, lesdits moyens d'injection et d'aspiration comprennent une première série d'orifices circonférentiellement espacés pour injecter ou aspirer la colle et une seconde série d'orifices circonférentiellement espacés pour aspirer ou injecter la colle injectée ou à aspirer par la première série d'orifices, ces deux séries étant axialement distantes l'une de l'autre.

A titre encore plus préférentiel, ladite première série d'orifices est formée à travers chaque embout sensiblement à la jonction entre ladite portion évasée et ladite portion axiale, ladite seconde série d'orifices étant formée à travers la portion axiale ou bien à travers ledit corps en regard de la portion axiale.

Encore plus préférentiellement, ladite première série est formée par des premiers orifices traversant axialement chaque embout radialement en regard de ladite interface de collage entre ledit corps et cet embout, et ladite seconde série est formée par des seconds orifices traversant radialement ladite portion axiale de chaque embout ou bien ledit corps.

Selon un premier mode préférentiel de réalisation de l'invention, lesdits seconds orifices traversent ladite portion axiale de chaque embout radialement à l'extérieur dudit corps, lequel est ainsi surmonté par cette portion axiale en étant emmanché dans l'embout, la colle recouvrant au moins une face radialement externe du corps.

Selon un second mode de réalisation de l'invention, lesdits seconds orifices traversent ledit corps radialement à l'extérieur de ladite portion axiale de chaque embout, et chaque extrémité du corps est calée dans une gorge axiale de l'embout correspondant, cette gorge axiale étant délimitée radialement à l'intérieur par la portion axiale et radialement à l'extérieur par une paroi axiale externe qui prolonge ladite portion évasée parallèlement à la portion axiale sur une distance plus courte que cette portion axiale, la colle recouvrant au moins une face radialement interne du corps.

Selon une autre caractéristique optionnelle et particulièrement avantageuse de l'invention, la bielle peut comprendre en outre, pour le raccordement de chaque embout audit corps, au moins un second joint ou mastic d'étanchéité annulaire, de préférence un joint torique, qui est monté dans une seconde gorge de chaque embout formée axialement en regard de ladite portion axiale et de l'extrémité correspondante dudit corps, ledit premier joint et ce second joint ou mastic étant montés radialement de part et d'autre du corps et axialement à l'opposé l'un de l'autre, la colle recouvrant à la fois des faces radialement interne et externe du corps.

On notera que l'utilisation préférentielle de ces deux premier et second joints toriques en appui contre les deux faces respectivement externe et interne du corps de bielle permet d'améliorer encore :
- la mise en oeuvre du collage par tirage sous vide,
- la protection de l'interface de collage vis-à-vis de l'environnement de la bielle,
- le guidage du corps dans chaque embout, et
- l'interface de collage obtenue par augmentation de la superficie de la colle présente à cette interface sur les deux faces du corps.

Conformément audit premier mode de réalisation de l'invention, pour chaque embout, ladite seconde gorge peut s'étendre axialement à partir de ladite portion évasée radialement à l'intérieur de ladite portion axiale, ledit second joint ou mastic appuyant contre une face radialement interne de l'extrémité correspondante dudit corps.

Conformément audit second mode de réalisation de l'invention, pour chaque embout, ladite seconde gorge peut s'étendre sur ladite paroi axiale externe radialement à l'extérieur de ladite portion axiale, ledit second joint ou mastic appuyant contre une face radialement externe de l'extrémité correspondante dudit corps.

Selon une autre caractéristique de l'invention, ledit corps par exemple pultrudé peut être à base d'au moins une nappe comprenant des premières fibres majoritairement parallèles à un axe longitudinal de symétrie du corps et imprégnées d'une matrice thermoplastique ou thermodurcissable, et de secondes fibres de guipage enroulées en hélice de manière oblique autour de ces premières fibres, et chaque embout (métallique ou non) peut être alors collé sur ledit corps par infusion d'une résine par exemple époxy sur chaque embout.

On notera que la pultrusion n'est qu'une possibilité parmi d'autres envisageables pour le façonnage du corps de bielle selon l'invention, étant précisé qu'un corps pultrudé présente l'avantage de contribuer de manière significative à l'allégement de la bielle de l'invention, car la pultrusion permet avantageusement de donner aux fibres une orientation principale dans la direction longitudinale du corps de bielle.

On notera également que ces secondes fibres de guipage inclinées de manière optimisée permettent avantageusement de conférer à la bielle une résistance satisfaisante à l'écrasement et aux impacts, et peuvent être de nature identique ou différente des premières fibres du corps, en fonction des besoins.

La séparation entre ces premières fibres intérieures globalement unidirectionnelles et axiales et ces secondes fibres extérieures de guipage principalement destinées à la protection de ces premières fibres apparaît particulièrement avantageuse.

En variante, ledit corps et lesdits embouts peuvent être à base d'au moins un matériau thermoplastique, et chaque embout peut alors être non seulement collé sur le corps mais en outre accroché mécaniquement à ce dernier par déformation permanente du corps radialement contre chaque embout par un sertissage pouvant former une butée d'assemblage (i.e. un arrêt mécanique) pour la jonction entre chaque embout et le corps avantageusement pultrudé.

Selon une autre caractéristique de l'invention, chacune desdites têtes comprend une extrémité de connexion auxdites structures qui prolonge ledit embout correspondant axialement vers l'extérieur du corps et qui est:
- de type fixe, l'extrémité de connexion en forme de chape double comportant deux parois parallèles de connexion qui peuvent être formées d'un seul tenant avec l'embout de part et d'autre d'un plan longitudinal médian du corps et qui sont respectivement munies d'orifices en regard destinés à être traversés par un axe de liaison à l'une de ces structures (en variante, une chape simple à une seule paroi de connexion est utilisable), ou bien
- de type réglable, l'extrémité de connexion comportant un support tubulaire inséré de manière ajustable dans l'embout et se terminant par une chape double à deux parois parallèles de connexion de part et d'autre d'un plan longitudinal médian du corps, ces parois étant respectivement munies d'orifices en regard destinés à être traversés par un axe de liaison à l'une de ces structures (en variante, une chape simple est également utilisable).

Une structure de plancher aéronautique selon l'invention est telle qu'elle comporte au moins une bielle telle que définie ci-dessus.

Un procédé de fabrication selon l'invention d'une bielle telle que définie ci-dessus comprend les étapes suivantes :
a) un montage dudit au moins un premier joint d'étanchéité au contact de chacun desdits embouts et d'une première face radialement interne ou externe d'une zone d'extrémité en regard dudit corps, puis
b) un collage de chaque embout sur le corps, par injection et aspiration - de préférence par tirage sous vide - d'une colle radialement entre le corps et chaque embout et axialement vers l'extérieur de ce premier joint, la colle présentant une viscosité à 25° C de préférence inférieure ou égale à 10 Pa.s (par exemple de l'ordre de 1 Pa.s).

Selon une autre caractéristique optionnelle de l'invention, ce procédé peut comprendre en outre à l'étape a) un montage d'au moins un second joint ou mastic d'étanchéité au contact de chaque embout et d'une seconde face radialement externe ou interne dudit corps opposée à ladite première face, ledit premier joint et ce second joint ou mastic étant ainsi montés radialement de part et d'autre du corps et axialement à l'opposé l'un de l'autre en regard d'une portion axiale globalement cylindrique de chaque embout.

Selon une autre caractéristique de l'invention, ce procédé peut avantageusement comprendre avant l'étape a) un façonnage par pultrusion dudit corps, qui peut être à base d'au moins une nappe de fibres imprégnées d'une matrice thermoplastique ou thermodurcissable, et l'étape b) de collage peut être mise en oeuvre par infusion d'une résine par exemple époxy au contact de chaque embout.

D'une manière générale, on notera que chaque embout selon l'invention peut être métallique (par exemple en aluminium) ou non, pouvant être dans ce dernier cas de type plastique ou composite (à base d'une matrice thermoplastique ou thermodurcissable).

Concernant le corps de bielle, s'il est de type composite alors sa matrice d'imprégnation des fibres peut être avantageusement choisie thermodurcissable, étant par exemple à base d'au moins une résine époxy, ou bien thermoplastique, étant par exemple à base d'au moins un polymère choisi dans le groupe constitué par les polyoléfines, les polyamides (PA), les polyétherimides (PEI), les polyarylimides (PAI), les polysulfures de phénylène (PPS), les polyaryléthercétones (PAEK), les polyéthersulfones (PES), les polyétheréthercétones (PEEK), les polyéthercétonecétones (PEKK) et leurs mélanges. On notera qu'il est également possible d'utiliser pour cette matrice thermoplastique des mélanges de polymères très différents (par exemple de deux polymères thermoplastiques respectivement polaires et apolaires) avec ou sans agents compatibilisants et éventuellement combinés à d'autres additifs. Quant aux fibres utilisables dans un corps composite de bielle, elles peuvent être par exemple à base de carbone, à titre non limitatif.

Dans le cas où l'on utilise des embouts métalliques et des fibres de carbone pour le corps de bielle, on notera que ledit premier joint et éventuellement ledit second joint permet(tent) de s'opposer à la corrosion galvanique de chaque embout par ces fibres de carbone.

On notera que d'autres polymères et fibres sont utilisables pour former le corps de bielle, pourvu qu'ils confèrent à la bielle une tenue aux impacts et une aptitude suffisante à la reprise des efforts axiaux.

On notera qu'une bielle selon l'invention présente, notamment grâce à des matériaux ayant des propriétés intrinsèques d'autoextinguibilité, de faible densité, toxicité de fumée et, du fait d'un allongement à la rupture particulièrement élevé des matrices thermoplastiques, une tenue aux impacts améliorée, un allégement accru de manière significative pour une même valeur donnée de ces propriétés (e.g. la tenue aux impacts) par rapport aux bielles structurales composites connues.

Cette bielle selon l'invention présente ainsi notamment, du fait desdites premières fibres majoritairement unidirectionnelles dans l'axe de la bielle qui sont protégées par une couche externe desdites secondes fibres dédiées à la tenue aux chocs, des propriétés mécaniques améliorées concernant la reprise des efforts axiaux et la tenue aux chocs, ce qui se traduit par un gain de masse sur la bielle pour l'obtention de propriétés déterminées.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence aux dessins joints, parmi lesquels :
la figure 1 est une vue schématique latérale éclatée illustrant le principe d'assemblage d'une bielle selon l'invention,
la figure 2 est une vue schématique latérale assemblée de la bielle de la figure 1,
la figure 3 est une vue schématique partielle en section axiale d'une zone d'extrémité d'une bielle selon un exemple de l'invention, le joint d'étanchéité combiné à l'interface de collage n'étant pas visible,
la figure 4a est une vue schématique partielle en section axiale d'une zone d'extrémité d'une bielle selon le second mode de réalisation de l'invention, montrant en outre une tête de type fixe,
la figure 4b est une vue schématique partielle en section axiale d'une zone d'extrémité d'une autre bielle selon ce second mode de l'invention, montrant en outre une tête de type réglable,
la figure 5 est une vue partielle à la fois en perspective et en section axiale d'une zone d'extrémité d'une autre bielle à tête fixe similaire à celle de la figure 4a,
la figure 6 est une vue partielle en section axiale d'une zone d'extrémité d'une autre bielle selon l'invention à tête réglable similaire à celle de la figure 4b,
la figure 7 est une vue schématique partielle en demi-section axiale d'une zone d'extrémité d'une bielle selon le premier mode de réalisation de l'invention, montrant les premier et second joints d'étanchéité et l'interface de collage entre corps et embout,
la figure 8 est une vue schématique en perspective de l'embout selon ce premier mode de la figure 7,
la figure 9 est une vue schématique partielle en demi-section axiale d'une zone d'extrémité d'une bielle selon le second mode de réalisation de l'invention, montrant les premier et second joints d'étanchéité et l'interface de collage entre corps et embout, et
la figure 10 est une vue schématique en perspective de l'embout selon ce second mode de la figure 9.

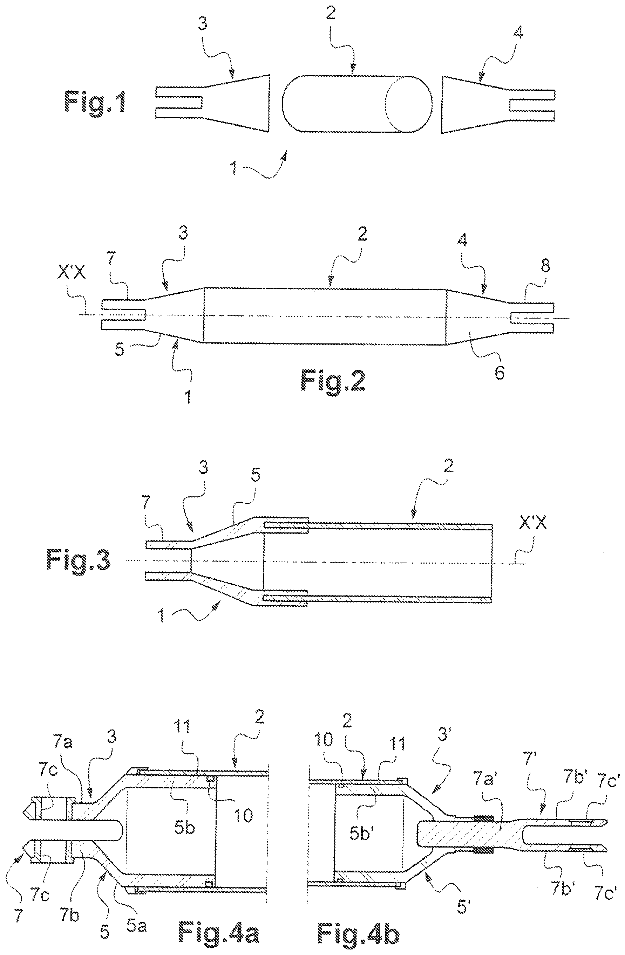

Comme illustré notamment aux figures 1-3 et 4a, une bielle 1 selon l'invention comporte un corps convexe 2 avantageusement façonné par pultrusion et deux têtes de connexion 3 et 4 collées à ce corps avantageusement par une technique d'infusion et destinées à relier la bielle 1 à des structures adjacentes via deux axes de liaison (non visibles) à monter respectivement dans ces têtes 3 et 4. Comme expliqué précédemment, le corps 2 peut être de type composite en étant constitué de nappes de fibres majoritairement axiales (i.e. en majorité parallèles à l'axe de symétrie longitudinal X'X de la bielle 1) telles que des fibres de carbone par exemple, imprégnées d'une matrice thermoplastique ou thermodurcissable, par exemple en résine époxy dans ce second cas, avec enroulement en hélice sur ces nappes d'une ou plusieurs fibres de guipage pour accroître la robustesse de la bielle 1 du point de vue de l'écrasement ou des impacts. Quant aux têtes 3 et 4, elles peuvent être par exemple métalliques (e.g. en aluminium) ou non (e.g. en un matériau thermoplastique ou thermodurcissable).

Comme visible aux figures 3 et 4a, chaque tête de type fixe 3, 4 forme une chape double d'un seul tenant comprenant un embout 5, 6 divergeant vers le corps 2 et une extrémité de connexion 7, 8 prolongeant l'embout 5, 6 axialement vers l'extérieur. Chaque embout 5, 6 comprend une portion évasée tronconique 5a et une portion axiale 5b qui la prolonge axialement vers l'intérieur et qui définit la zone d'assemblage avec le corps 2. Chaque extrémité de connexion 7, 8 comporte deux parois plates parallèles 7a et 7b qui sont espacées de part et d'autre de l'axe X'X et qui sont percées de deux orifices 7c (voir figure 4a) en regard destinés à recevoir l'un des axes de liaison.

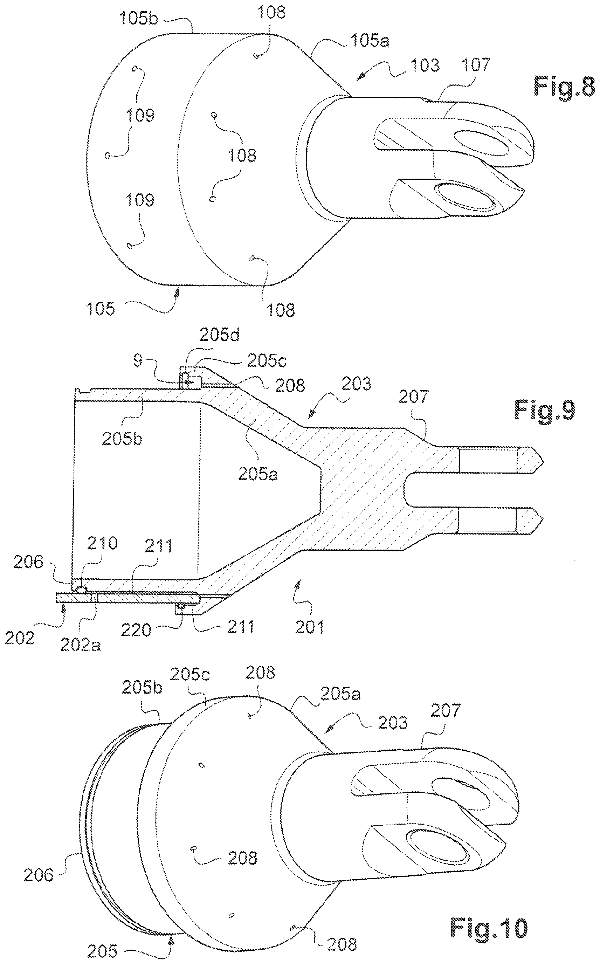

Dans l'exemple de la figure 4a qui illustre schématiquement le second mode de réalisation de l'invention, on voit que chaque tête fixe 3, 4 présente une gorge axiale 9 (visible à la figure 9) dans laquelle sont calées les deux extrémités du corps 2, avec interposition d'un premier joint d'étanchéité annulaire 10 et, axialement vers l'extérieur de ce joint 10, une interface de collage 11 qui sera décrite plus précisément en référence à cette figure 9.

Dans la variante de la figure 4b qui montre également le corps 2 calé dans une gorge axiale 9 de la portion axiale 5b' de chaque embout 5', on voit que chaque tête de type réglable 3' a son embout tronconique 5' qui diverge également vers le corps 2 mais qui ne se prolonge pas d'un seul tenant par l'extrémité de connexion 7', laquelle est rapportée par insertion dans l'embout 5'. Cette extrémité 7' comporte par exemple un support tubulaire 7a' inséré de manière ajustable dans l'embout 5' et se terminant par deux parois parallèles de connexion 7b' de part et d'autre d'un plan longitudinal médian du corps 2 contenant l'axe X'X, ces parois 7b' étant respectivement munies d'orifices en regard 7c' destinés à être traversés par un axe de liaison à l'une de ces structures.

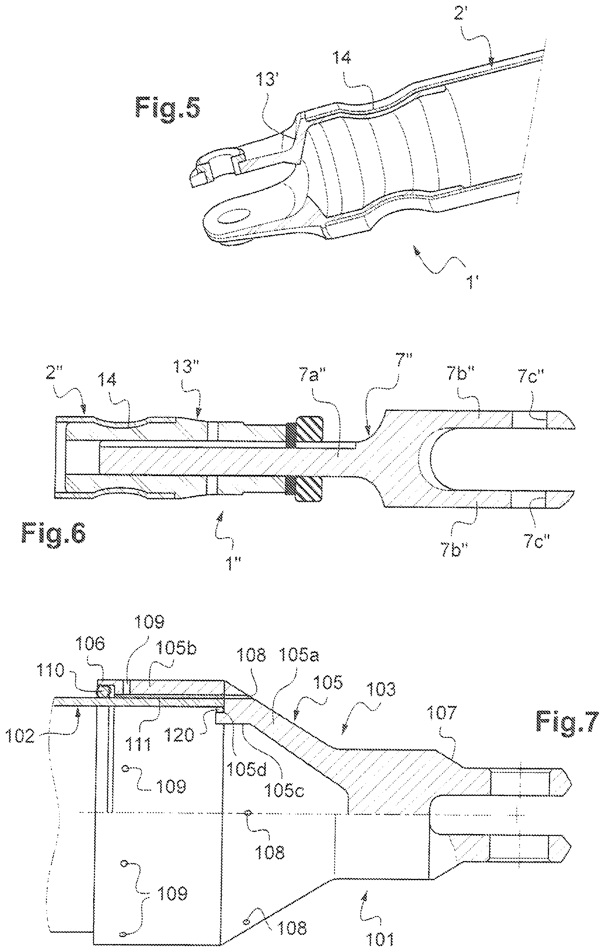

Les figures 5 et 6 illustrent respectivement les cas de bielles 1' et 1" réalisées en matériau(x) thermoplastique(s), avec une interface de collage entre corps 2', 2" et embout 13', 13", une extrémité de connexion 7" analogue à celle 7' de la figure 4b (i.e. à support tubulaire 7a" muni de parois parallèles de connexion 7b" à orifices en regard 7c") étant insérée à la figure 6 dans l'embout 13". Cette interface est similaire à l'interface 11 de la figure 4b, mais avec en plus un accrochage mécanique de type sertissage 14 appliqué au corps 2', 2", à l'intérieur duquel a été emmanché l'embout 13', 13". Cette déformation permanente appliquée à l'ensemble corps 2', 2" - embout 13', 13" permet de sécuriser le collage et favorise la résistance à la traction de cet assemblage.

Les figures 7 et 8 illustrent un collage mis en oeuvre de manière étanche pour une bielle 101 selon le premier mode de réalisation de l'invention, qui comprend dans un premier temps le positionnement d'un premier joint torique 110 dans une première gorge 106 formée en l'extrémité axialement interne de chaque embout 105 (chaque embout 105 est dans cet exemple formé d'un seul tenant avec l'extrémité de connexion fixe 107 de la tête 103 correspondante, étant précisé qu'une extrémité de connexion réglable 7' selon la figure 4b est également utilisable), la gorge 106 étant formée sur la face radialement interne de la portion axiale 105b de chaque embout 105 et étant dans l'exemple de la figure 7 formée d'un épaulement radial.

Chaque embout 105 selon l'invention incorpore (voir figure 8), en vue de l'opération de collage par tirage au vide par injection d'une colle 111 thermo-activable par exemple de type résine époxy et de basse viscosité (inférieure à 1 Pa.s à 25° C) :
- des premiers orifices 108 circonférentiellement espacés pour injecter ou aspirer la colle 111, qui sont formés à la jonction entre la portion évasée 105a et la portion axiale 105b en traversant axialement cette jonction et qui débouchent ainsi radialement en regard de l'interstice annulaire destiné à recevoir la colle 111 entre le corps tubulaire 102 et la face radialement interne de la portion axiale 105b, et
- des seconds orifices 109 circonférentiellement espacés pour aspirer ou injecter la colle 111 injectée ou à aspirer par les premiers orifices 108, qui sont formés immédiatement en deçà du premier joint 110 radialement à travers une zone axialement interne de la portion axiale 105b.

On guide le corps 102 à l'intérieur de l'embout 105 au contact du premier joint 110 pour son emmanchement radialement à l'intérieur de la portion axiale 105b, jusqu'à ce que l'extrémité axialement interne du corps 102 vienne buter contre la jonction entre la portion axiale 105b et la portion tronconique 105a de l'embout 105. Le premier joint 110 appuie alors sur la face radialement externe du corps 102.

Afin de réaliser ce collage par tirage au vide dans de meilleures conditions, de faciliter le guidage du corps 102 dans chaque embout 105, d'améliorer la protection ultérieure de l'interface de collage 111 obtenue vis-à-vis de l'environnement et de maximiser la superficie de cette interface 111, notamment, il peut être avantageux de pourvoir l'embout 105 des figures 7 et 8 d'un second joint torique ou mastic annulaire 120 que l'on positionne dans une seconde gorge 105d de chaque embout 105 pour que ce second joint 120 appuie sur la face radialement interne de l'extrémité correspondante du corps 102 axialement à l'opposé du premier joint 110. La seconde gorge 105d s'étend axialement à partir de la portion évasée 105a sur une courte distance par une courte portion axiale 105c, radialement à l'intérieur et en regard de la portion axiale 105b.

Après ce collage par tirage au vide, la colle 111 recouvre la face externe du corps 102 et la face interne en regard de la portion axiale 105b de chaque embout 105, à l'exception de la première gorge 106 puisque l'interface annulaire de collage 111 (qui peut présenter une épaisseur allant de 0,1 mm à 0,5 mm) se termine axialement à l'extérieur du premier joint 110.

Les figures 9 et 10 illustrent un collage mis en oeuvre de manière étanche pour une bielle 201 selon le second mode de réalisation de l'invention, qui comprend dans un premier temps le positionnement d'un premier joint torique 210 dans une gorge 206 formée en l'extrémité axialement interne de chaque embout 205 (chaque embout 205 est dans cet exemple formé d'un seul tenant avec l'extrémité de connexion fixe 207 de la tête 203 correspondante, étant précisé qu'une extrémité de connexion réglable 7' selon la figure 4b est également utilisable), la gorge 206 étant formée sur la face radialement externe de la portion axiale 205b de chaque embout 205 et étant dans l'exemple de la figure 9 délimitée par deux bords radiaux.

Chaque embout 205 selon ce second mode incorpore (voir figure 10), en vue du collage par tirage au vide par injection de la même colle 211 que pour le premier mode, des premiers orifices 208 circonférentiellement espacés pour injecter ou aspirer la colle 211, qui sont formés à la jonction entre la portion évasée 205a et la portion axiale 205b en traversant axialement cette jonction et qui débouchent ainsi radialement en regard de l'interstice annulaire destiné à recevoir la colle 211 entre la face radialement externe de la portion axiale 205b et le corps 202.

Contrairement au premier mode précité, les seconds orifices 202a circonférentiellement espacés pour aspirer ou injecter la colle 211 injectée ou à aspirer par les premiers orifices 208 ne sont pas ici formés dans chaque embout 205 mais radialement à travers une zone axialement interne du corps 202. Ces seconds orifices 202a se trouvent immédiatement en deçà du premier joint 210 (i.e. axialement vers l'extérieur de ce dernier), une fois que l'on a guidé le corps 202 sur chaque embout 205 au contact du premier joint 210 pour son emmanchement radialement à l'extérieur de la portion axiale 205b jusqu'à ce que l'extrémité axialement interne du corps 202 vienne buter au fond d'une gorge axiale 9 de l'embout 205 (le premier joint 210 appuie alors sur la face radialement interne du corps 202). La gorge axiale 9 est délimitée radialement à l'intérieur par la portion axiale 205b et radialement à l'extérieur par une paroi axiale externe 205c qui prolonge la portion évasée 205a parallèlement à la portion axiale 205b sur une distance plus courte que cette portion axiale 205b.

De plus, cette courte paroi axiale externe 205c de la gorge axiale 9 comprend sur sa face radialement interne une gorge 205d recevant un second joint d'étanchéité torique 220 qui appuie sur la face radialement externe de l'extrémité correspondante du corps 202. Comme expliqué précédemment, l'utilisation combinée de ces premier et second joints 210 et 220 permet d'optimiser le guidage du corps 202, le collage, l'interface de collage 211 et sa protection ultérieure.

En effet, après ce collage par tirage au vide, la colle 211 (qui peut présenter une épaisseur allant de 0,1 mm à 0,5 mm) recouvre non seulement la face externe de la portion axiale 205b de chaque embout 205 - à l'exception de la gorge 206 puisque l'interface de collage 211 se termine axialement à l'extérieur du premier joint 210 - et la face interne du corps 202, mais en outre l'extrémité radiale et la zone de la face externe du corps 202 située en deçà du second joint 220. En d'autres termes, la colle 211 recouvre ici deux zones annulaires respectives des faces interne et externe du corps 202, de manière continue via l'extrémité radiale de ce dernier.

On notera que le procédé de fabrication d'une bielle selon l'invention permet non seulement de réaliser des bielles destinées à des planchers aéronautiques, mais encore toutes bielles de systèmes ou de fixation de structures secondaires, d'équipements ou de mobiliers, comme par exemple celles illustrées aux figures 4b ou 6.

## Revendications

1. Bielle (1, 1', 1", 101, 201) qui comprend un corps tubulaire (2, 2', 2", 102, 202) présentant deux extrémités et deux têtes (3, 3', 103, 203 et 4) de connexion de ces extrémités à des structures adjacentes et qui est adaptée à une reprise d'efforts majoritairement axiaux générés par ces structures, chaque tête comprenant un embout (5, 6, 5', 13', 13", 105, 205) évasé vers le corps et collé sur ce dernier en une interface de collage (11, 111, 211), **caractérisée en ce que** la bielle comprend au moins un premier joint d'étanchéité (10, 110, 210) monté radialement entre et contre le corps et l'embout de chaque tête, axialement vers l'intérieur de ladite interface de collage.

2. Bielle (1, 1', 1", 101, 201) selon la revendication 1, **caractérisée en ce que** ledit premier joint (10, 110, 210), annulaire et de préférence torique, est monté dans une première gorge (106, 206) formée en une extrémité axialement interne de chaque embout (105, 205).

3. Bielle (1, 1', 1", 101, 201) selon la revendication 2, **caractérisée en ce que** chaque embout (105, 205) comprend une portion évasée (105a, 205a) globalement tronconique prolongée axialement vers l'intérieur par une portion axiale (105b, 205b) globalement cylindrique, la bielle incorporant, axialement vers l'extérieur dudit premier joint (110, 210), des moyens d'injection et/ou d'aspiration (108 et 109, 208 et 202a) d'une colle (111, 211) qui sont aptes à former ladite interface de collage (111, 211) sur la portion axiale de chaque embout, cette colle présentant une viscosité à 25° C de préférence inférieure ou égale à 10 Pa.s.

4. Bielle (1, 1', 1", 101, 201) selon la revendication 3, **caractérisée en ce que** lesdits moyens d'injection et d'aspiration (108 et 109, 208 et 202a) comprennent une première série d'orifices (108, 208) circonférentiellement espacés pour injecter ou aspirer la colle (111, 211) et une seconde série d'orifices (109, 202a) circonférentiellement espacés pour aspirer ou injecter la colle injectée ou à aspirer par la première série d'orifices, ces deux séries étant axialement distantes l'une de l'autre.

5. Bielle (1, 1', 1", 101, 201) selon la revendication 4, **caractérisée en ce que** ladite première série d'orifices (108, 208) est formée à travers chaque embout (105, 205) sensiblement à la jonction entre ladite portion évasée (105a, 205a) et ladite portion axiale (105b, 205b), ladite seconde série d'orifices (109, 202a) étant formée à travers la portion axiale (105b) ou bien à travers ledit corps (202) en regard de la portion axiale (205b).

6. Bielle (1, 1', 1", 101, 201) selon la revendication 5, **caractérisée en ce que** ladite première série est formée par des premiers orifices (108, 208) traversant axialement chaque embout (105, 205) radialement en regard de ladite interface de collage (111, 211) entre ledit corps (102, 202) et cet embout, et **en ce que** ladite seconde série est formée par des seconds orifices (109, 202a) traversant radialement ladite portion axiale (105b) de chaque embout (105) ou bien ledit corps (202).

7. Bielle (1, 1', 1", 101) selon la revendication 6, **caractérisée en ce que** lesdits seconds orifices (109) traversent ladite portion axiale (105b) de chaque embout (105) radialement à l'extérieur dudit corps (102), lequel est ainsi surmonté par cette portion axiale en étant emmanché dans l'embout, la colle (111) recouvrant au moins une face radialement externe du corps.

8. Bielle (1, 1', 1", 201) selon la revendication 6, **caractérisée en ce que** lesdits seconds orifices (202a) traversent ledit corps (202) radialement à l'extérieur de ladite portion axiale (205b) de chaque embout (205), et **en ce que** chaque extrémité du corps est calée dans une gorge axiale (9) de l'embout correspondant, cette gorge axiale étant délimitée radialement à l'intérieur par la portion axiale et radialement à l'extérieur par une paroi axiale externe (205c) qui prolonge ladite portion évasée (205a) parallèlement à la portion axiale sur une distance plus courte que cette portion axiale, la colle (211) recouvrant au moins une face radialement interne du corps.

9. Bielle (1, 1', 1", 101, 201) selon une des revendications 3 à 8, **caractérisée en ce qu'**elle comprend en outre, pour le raccordement de chaque embout (105, 205) audit corps (102, 202), au moins un second joint ou mastic d'étanchéité annulaire (120, 220) qui est monté dans une seconde gorge (105d, 205d) de chaque embout formée axialement en regard de ladite portion axiale (105b, 205b) et de l'extrémité correspondante dudit corps, ledit premier joint (110, 210) et ce second joint ou mastic (120, 220) étant montés radialement de part et d'autre du corps et axialement à l'opposé l'un de l'autre, la colle (111, 211) recouvrant à la fois des faces radialement interne et externe du corps.

10. Bielle (1, 1', 1", 101) selon les revendications 7 et 9, **caractérisée en ce que** pour chaque embout (105), ladite seconde gorge (105d) s'étend axialement à partir de ladite portion évasée (105a) radialement à l'intérieur de ladite portion axiale (105b), ledit second joint ou mastic (120) appuyant contre une face radialement interne de l'extrémité correspondante dudit corps (102).

11. Bielle (1, 1', 1", 201) selon les revendications 8 et 9, **caractérisée en ce que** pour chaque embout (205), ladite seconde gorge (205d) s'étend sur ladite paroi axiale externe (205c) radialement à l'extérieur de ladite portion axiale (205b), ledit second joint ou mastic (220) appuyant contre une face radialement externe de l'extrémité correspondante dudit corps (202).

12. Bielle (1, 101, 201) selon une des revendications 1 à 11, **caractérisée en ce que** ledit corps (2, 102, 202) par exemple pultrudé est à base d'au moins une nappe comprenant des premières fibres majoritairement parallèles à un axe longitudinal de symétrie (X'X) du corps et imprégnées d'une matrice thermoplastique ou thermodurcissable, et de secondes fibres de guipage enroulées en hélice de manière oblique autour de ces premières fibres, et **en ce que** chaque embout (5, 6, 105, 205) métallique ou non est collé sur ledit corps par infusion d'une résine sur chaque embout.

13. Bielle (1', 1") selon une des revendications 1 à 11, **caractérisée en ce que** ledit corps (2', 2") et lesdits embouts (13', 13") sont à base d'au moins un matériau thermoplastique, et **en ce que** chaque embout est non seulement collé sur le corps mais en outre accroché mécaniquement à ce dernier par déformation permanente du corps radialement contre chaque embout par un sertissage (14) pouvant former une butée d'assemblage pour la jonction mécanique entre chaque embout (13') et le corps (2') par exemple pultrudé.

14. Bielle (1, 1', 1", 101, 201) selon une des revendications précédentes, **caractérisée en ce que** chacune desdites têtes (3, 3', 103, 203 et 4) comprend une extrémité de connexion (7, 8, 7', 7", 107, 207) auxdites structures qui prolonge ledit embout correspondant (5, 6, 5', 13', 13", 105, 205) axialement vers l'extérieur du corps (2, 2', 2", 102, 202) et qui est:
- de type fixe, l'extrémité de connexion (7, 8, 107, 207) en forme de chape double comportant deux parois parallèles de connexion (7a et 7b) qui sont formées d'un seul tenant avec l'embout (5, 6, 105, 205) de part et d'autre d'un plan longitudinal médian du corps (2, 2', 102, 202) et qui sont respectivement munies d'orifices (7c) en regard destinés à être traversés par un axe de liaison à l'une de ces structures, ou bien
- de type réglable, l'extrémité de connexion (7', 7") comportant un support tubulaire (7a', 7a") inséré de manière ajustable dans l'embout (5', 13") et se terminant par une chape double à deux parois parallèles de connexion (7b', 7b") de part et d'autre d'un plan longitudinal médian du corps (2, 2"), ces parois étant respectivement munies d'orifices (7c', 7c") en regard destinés à être traversés par un axe de liaison à l'une de ces structures.

15. Structure de plancher aéronautique, **caractérisée en ce qu'**elle comporte au moins une bielle (1, 1', 1", 101, 201) selon une des revendications précédentes.

16. Procédé de fabrication d'une bielle (1, 1', 1", 101, 201) selon une des revendications 1 à 14, **caractérisé en ce qu'**il comprend les étapes suivantes :
a) un montage dudit au moins un premier joint d'étanchéité (10, 110, 210) au contact de chacun desdits embouts (5, 6, 5', 13', 13", 105, 205) et d'une première face radialement interne ou externe d'une zone d'extrémité en regard dudit corps (2, 2', 2", 102, 202), puis
b) un collage de chaque embout sur le corps, par injection et aspiration d'une colle (11, 111, 211) radialement entre le corps et chaque embout et axialement vers l'extérieur de ce premier joint, la colle présentant une viscosité à 25° C de préférence inférieure à 1 Pa.s.

17. Procédé selon la revendication 16, **caractérisé en ce qu'**il comprend en outre à l'étape a) un montage d'au moins un second joint ou mastic d'étanchéité (120, 220) au contact de chaque embout (105, 205) et d'une seconde face radialement externe ou interne dudit corps (102, 202) opposée à ladite première face, ledit premier joint (110, 210) et ce second joint ou mastic (120, 220) étant ainsi montés radialement de part et d'autre du corps et axialement à l'opposé l'un de l'autre en regard d'une portion axiale (105b, 205b) globalement cylindrique de chaque embout.

18. Procédé selon la revendication 16 ou 17, **caractérisé en ce qu'**il comprend avant l'étape a) un façonnage par pultrusion dudit corps (2, 102, 202), qui est à base d'au moins une nappe de fibres imprégnées d'une matrice thermoplastique ou thermodurcissable, et **en ce que** l'étape b) de collage est mise en oeuvre par infusion d'une résine au contact de chaque embout (5, 6, 5', 105, 205).

## Patentansprüche

1. Stange (1, 1', 1", 101, 201), die einen röhrenförmigen Körper (2, 2', 2", 102, 202) umfasst, der zwei Enden und zwei Köpfe (3, 3', 103, 203 und 4) zur Verbindung dieser Enden mit benachbarten Strukturen aufweist, und die für eine Aufnahme von hauptsächlich axialen Kräften angepasst ist, die durch Strukturen erzeugt werden, wobei jeder Kopf einen Ansatz (5, 6, 5', 13', 13", 105, 205) umfasst, der in Richtung des Körpers konisch erweitert ist und auf diesen letzteren an einer Klebegrenzfläche (11, 111, 211) geklebt ist, **dadurch gekennzeichnet, dass** die Stange mindestens eine erste Dichtung (10, 110, 210) umfasst, die radial zwischen und gegen den Körper und den Ansatz von jedem Kopf axial in Richtung des Inneren der Klebegrenzfläche angebracht ist.

2. Stange (1, 1', 1", 101, 201) nach Anspruch 1, **dadurch gekennzeichnet, dass** die erste Dichtung (10, 110, 210), die ringförmig und vorzugsweise torisch ist, in einer ersten Nut (106, 206) angebracht ist, die an einem axial inneren Ende von jedem Ansatz (105, 205) gebildet ist.

3. Stange (1, 1', 1", 101, 201) nach Anspruch 2, **dadurch gekennzeichnet, dass** jeder Ansatz (105, 205) einen konisch erweiterten Abschnitt (105a, 205a) umfasst, der allgemein kegelstumpfförmig ist und durch einen axialen Abschnitt (105b, 205b), der allgemein zylindrisch ist, axial in Richtung des Inneren verlängert ist, wobei die Stange axial in Richtung der Außenseite der ersten Dichtung (110, 210) Mittel zum Einspritzen und/oder Ansaugen (108 und 109, 208 und 202a) eines Klebers (111, 211) aufnimmt, die geeignet sind, die Klebegrenzfläche (111, 211) auf dem axialen Abschnitt von jedem Ansatz zu bilden, wobei dieser Kleber bei 25 °C eine Viskosität aufweist, die vorzugsweise niedriger als oder gleich 10 Pa.s ist.

4. Stange (1, 1', 1", 101, 201) nach Anspruch 3, **dadurch gekennzeichnet, dass** die Einspritz- und Ansaugmittel (108 und 109, 208 und 202a) eine erste Reihe von Öffnungen (108, 208), die in Umfangsrichtung beabstandet sind, um den Kleber (111, 211) einzuspritzen oder anzusaugen, und eine zweite Reihe von Öffnungen (109, 202a) umfassen, die in Umfangsrichtung beabstandet sind, um den durch die erste Reihe von Öffnungen eingespritzten oder anzusaugenden Kleber anzusaugen oder einzuspritzen, wobei diese zwei Reihen axial voneinander beabstandet sind.

5. Stange (1, 1', 1", 101, 201) nach Anspruch 4, **dadurch gekennzeichnet, dass** die erste Reihe von Öffnungen (108, 208) durch jeden Ansatz (105, 205) im Wesentlichen an der Verbindungsstelle zwischen dem konisch erweiterten Abschnitt (105a, 205a) und dem axialen Abschnitt (105b, 205b) gebildet ist, wobei die zweite Reihe von Öffnungen (109, 202a) durch den axialen Abschnitt (105b) oder durch den Körper (202) dem axialen Abschnitt (205b) gegenüberstehend gebildet ist.

6. Stange (1, 1', 1", 101, 201) nach Anspruch 5, **dadurch gekennzeichnet, dass** die erste Reihe durch erste Öffnungen (108, 208) gebildet ist, die jeden Ansatz (105, 205) der Klebegrenzfläche (111, 211) zwischen dem Körper (102, 202) und diesem Ansatz radial gegenüberstehend axial durchqueren, und dadurch, dass die zweite Reihe durch zweite Öffnungen (109, 202a) gebildet ist, die den axialen Abschnitt (105b) von jedem Ansatz (105) oder den Körper (202) radial durchqueren.

7. Stange (1, 1', 1", 101) nach Anspruch 6, **dadurch gekennzeichnet, dass** die zweiten Öffnungen (109) den axialen Abschnitt (105b) von jedem Ansatz (105) radial auf der Außenseite des Körpers (102) durchqueren, der somit durch diesen axialen Abschnitt überragt wird, indem er in den Ansatz eingepresst ist, wobei der Kleber (111) mindestens eine radiale Außenseite des Körpers abdeckt.

8. Stange (1, 1', 1", 201) nach Anspruch 6, **dadurch gekennzeichnet, dass** die zweiten Öffnungen (202a) den Körper (202) radial auf der Außenseite des axialen Abschnitts (205b) von jedem Ansatz (205) durchqueren, und dadurch, dass jedes Ende des Körpers in einer axialen Nut (9) des entsprechenden Ansatzes verkeilt ist, wobei diese axiale Nut radial im Inneren durch den axialen Abschnitt und radial auf der Außenseite durch eine axiale Außenwand (205c) abgegrenzt ist, die den konisch erweiterten (205a) Abschnitt parallel zum axialen Abschnitt über eine Strecke verlängert, die kürzer ist als dieser axiale Abschnitt, wobei der Kleber (211) mindestens eine radiale Innenseite des Körpers abdeckt.

9. Stange (1, 1', 1", 101, 201) nach einem der Ansprüche 3 bis 8, **dadurch gekennzeichnet, dass** sie ferner für den Anschluss von jedem Ansatz (105, 205) an den Körper (102, 202) mindestens eine/n zweite/n ringförmige/n Dichtung oder Kitt (120, 220) umfasst, die/der in einer zweiten Nut (105d, 205d) von jedem Ansatz angebracht ist, die axial dem axialen Abschnitt (105b, 205b) und dem entsprechenden Ende des Körpers gegenüberliegend gebildet ist, wobei die erste Dichtung (110, 210) und diese/r zweite Dichtung oder Kitt (120, 220) radial auf beiden Seiten des Körpers und axial einander gegenüberliegend angebracht sind, wobei der Kleber (111, 211) gleichzeitig radial innere und äußere Seiten des Körpers abdeckt.

10. Stange (1, 1', 1", 101) nach Anspruch 7 und 9, **dadurch gekennzeichnet, dass** für jeden Ansatz (105) die zweite Nut (105d) sich ausgehend von dem konisch erweiterten Abschnitt (105a) radial im Inneren des axialen Abschnitts (105d) axial erstreckt, wobei die/der zweite Dichtung oder Kitt (120) gegen eine radial innere Seite des entsprechenden Endes des Körpers (102) aufliegt.

11. Stange (1, 1', 1", 201) nach Anspruch 8 und 9, **dadurch gekennzeichnet, dass** für jeden Ansatz (205) die zweite Nut (205d) sich auf der axialen Außenwand (205c) radial auf der Außenseite des axialen Abschnitts (205b) erstreckt, wobei die/der zweite Dichtung oder Kitt (220) gegen eine radiale Außenseite des entsprechenden Endes des Körpers (202) aufliegt.

12. Stange (1, 101, 201) nach einem der Ansprüche 1 bis 11, **dadurch gekennzeichnet, dass** der zum Beispiel pultrudierte Körper (2, 102, 202) auf Basis von mindestens einer Gewebelage ist, die erste Fasern, die hauptsächlich parallel zu einer Symmetrielängsachse (X'X) des Körpers sind und mit einer thermoplastischen oder wärmehärtbaren Matrix getränkt sind, und zweite Umspinnungsfasern umfasst, die schraubenförmig auf schräge Art und Weise um diese ersten Fasern gewickelt sind, und dadurch, dass jeder metallische oder nicht metallische Ansatz (5, 6, 105, 205) durch Infusion eines Harzes auf jedem Ansatz geklebt ist.

13. Stange (1', 1") nach einem der Ansprüche 1 bis 11, **dadurch gekennzeichnet, dass** der Körper (2', 2") und die Ansätze (13', 13") auf Basis von mindestens einem thermoplastischen Material sind, und dadurch, dass jeder Ansatz nicht nur auf den Körper geklebt ist, sondern darüber hinaus mechanisch an diesen letzteren durch ständige Verformung des Körpers radial gegen jeden Ansatz durch eine Quetschung (14) angehängt ist, die einen Zusammenbauanschlag für die mechanische Verbindungsstelle zwischen jedem Ansatz (13') und dem zum Beispiel pultrudierten Körper (2') bilden kann.

14. Stange (1, 1', 1", 101, 201) nach einem der vorhergehenden Ansprüche, **dadurch gekennzeichnet, dass** jeder der Köpfe (3, 3', 103, 203 und 4) ein Ende zur Verbindung (7, 8, 7', 7", 107, 207) mit den Strukturen umfasst, das den entsprechenden Ansatz (5, 6, 5', 13', 13", 105, 205) axial in Richtung der Außenseite des Körpers (2, 2', 2", 102, 202) verlängert und das Folgendes ist:
- vom festen Typ, wobei das Verbindungsende (7, 8, 107, 207) mit der Form einer Doppelgabel zwei parallele Verbindungswände (7a und 7b) umfasst, die in einem Stück mit dem Ansatz (5, 6, 105, 205) auf beiden Seiten einer in Längsrichtung verlaufenden Mittelebene des Körpers (2, 2', 102, 202) gebildet sind und die jeweils mit gegenüberliegenden Öffnungen (7c) versehen sind, die dazu bestimmt sind, durch eine Verbindungsachse mit einer dieser Strukturen durchquert zu werden, oder
- vom einstellbaren Typ, wobei das Verbindungsende (7', 7") eine röhrenförmige Unterstützung (7a', 7a") umfasst, die auf einstellbare Art und Weise in den Ansatz (5', 13") eingesetzt ist und durch eine Doppelgabel mit zwei parallelen Verbindungswänden (7b', 7b") auf beiden Seiten einer in Längsrichtung verlaufenden Mittelebene des Körpers (2, 2") endet, wobei diese Wände jeweils mit gegenüberliegenden Öffnungen (7c', 7c") versehen sind, die dazu bestimmt sind, durch eine Verbindungsachse mit einer dieser Strukturen durchquert zu werden.

15. Struktur für die Luftfahrt, **dadurch gekennzeichnet, dass** sie mindestens eine Stange (1, 1', 1", 101, 201) nach einem der vorhergehenden Ansprüche umfasst.

16. Verfahren zur Herstellung einer Stange (1, 1', 1", 101, 201) nach einem der Ansprüche 1 bis 14, **dadurch gekennzeichnet, dass** es die folgenden Schritte umfasst:
a) ein Anbringen der mindestens einen ersten Dichtung (10, 110, 210) in Kontakt mit jedem der Ansätze (5, 6, 5', 13', 13", 105, 205) und einer ersten radialen Innen- oder Außenseite eines dem Körper (2, 2', 2", 102, 202) gegenüberliegenden Endbereichs, und
b) ein Kleben von jedem Ansatz auf den Körper durch Einspritzen und Ansaugen eines Klebers (11, 111, 211) radial zwischen den Körper und jeden Ansatz und axial in Richtung der Außenseite dieses ersten Punkts, wobei der Kleber bei 25 °C eine Viskosität aufweist, die vorzugsweise niedriger als 1 Pa.s ist.

17. Verfahren nach Anspruch 16, **dadurch gekennzeichnet, dass** es ferner im Schritt a) ein Anbringen von mindestens einer/einem zweiten Dichtung oder Kitt (120, 220) im Kontakt mit jedem Ansatz (105, 205) und einer der ersten Seite entgegengesetzten zweiten radialen Außen- oder Innenseite des Körpers (102, 202) umfasst, wobei die erste Dichtung (110, 210) und diese/r zweite Dichtung oder Kitt (120, 220) somit radial auf beiden Seiten des Körpers und axial einander entgegengesetzt einem axialen allgemeinen zylindrischen Abschnitt (105b, 205b) von jedem Ansatz gegenüberliegend angebracht sind.

18. Verfahren nach Anspruch 16 oder 17, **dadurch gekennzeichnet, dass** es vor dem Schritt a) eine Formgebung des Körpers (2, 102, 202) durch Pultrusion umfasst, der auf Basis von mindestens einer Gewebelage aus mit einer thermoplastischen oder wärmehärtbaren Matrix getränkten Fasern ist, und dadurch, dass der Schritt b) zum Kleben durch Infusion eines Harzes in Kontakt mit jedem Ansatz (5, 6, 5', 105, 205) durchgeführt wird.

## Claims

1. A connecting rod (1, 1', 1", 101, 201) that comprises a tubular body (2, 2', 2", 102, 202) with two ends and two heads (3, 3', 103, 203 and 4) for connecting those ends to adjacent structures and that is suitable for reacting primarily axial forces generated by these structures, each head comprising an end-piece (5, 6, 5', 13', 13", 105, 205) flared toward the body and glued on the latter in a gluing interface (11, 111, 211), **characterized in that** the connecting rod comprises at least one first sealing gasket (10, 110, 210) mounted radially between and against the body and the end-piece of each head, axially toward the inside of said gluing interface.

2. The connecting rod (1, 1', 1", 101, 201) according to claim 1, **characterized in that** said first sealing gasket (10, 110, 210), which is annular and preferably an O-ring, is mounted in a first groove (106, 206) formed at an axially inner end of each end-piece (105, 205).

3. The connecting rod (1, 1', 1", 101, 201) according to claim 2, **characterized in that** each end-piece (105, 205) comprises a globally frustoconical flared portion (105a, 205a) extended axially toward the inside by a globally cylindrical axial portion (105b, 205b), the connecting rod incorporating, axially toward the outside of said first sealing gasket (110, 210), injection and/or suction means (108 and 109, 208 and 202a) of a glue (111, 211) that are able to form said gluing interface (111, 211) on the axial portion of each end-piece, this glue having a viscosity at 25°C preferably less than or equal to 10 Pa.s.

4. The connecting rod (1, 1', 1", 101, 201) according to claim 3, **characterized in that** said injection and suction means (108 and 109, 208 and 202a) comprise a first series of orifices (108, 208) circumferentially spaced apart to inject or suction glue (111, 211) and a second series of orifices (109, 202a) circumferentially spaced apart to suction or inject the injected glue or to suction through the first series of orifices, these two series being axially separate from one another.

5. The connecting rod (1, 1', 1", 101, 201) according to claim 4, **characterized in that** said first series of orifices (108, 208) is formed through each end-piece (105, 205) substantially at the junction between said flared portion (105a, 205a) and said axial portion (105b, 205b), said second series of orifices (109, 202a) being formed through the axial portion (105b) or else through said body (202) facing the axial portion (205b).

6. The connecting rod (1, 1', 1", 101, 201) according to claim 5, **characterized in that** said first series is formed by first orifices (108, 208) crossing axially through each end-piece (105, 205) radially facing said gluing interface (111, 211) between said body (102, 202) and this end-piece, and **in that** said second series is formed by second orifices (109, 202a) crossing radially through said axial portion (105b) of each end-piece (105) or else said body (202).

7. The connecting rod (1, 1', 1", 101) according to claim 6, **characterized in that** said second orifices (109) cross through said axial portion (105b) of each end-piece (105) radially outside said body (102), which is thus topped by this axial portion while being fitted in the end-piece, the glue (111) overlapping at least one radially outer face of the body.

8. The connecting rod (1, 1', 1", 201) according to claim 6, **characterized in that** said second orifices (202a) cross through said body (202) radially outside said axial portion (205b) of each end-piece (205), and **in that** each end of the body is wedged in an axial groove (9) of the corresponding end-piece, this axial groove being radially inwardly defined by the axial portion and radially outwardly defined by an outer axial wall (205c) that extends said flared portion (205a) parallel to the axial portion over a shorter distance than this axial portion, the glue (211) covering at least one radially inner face of the body.

9. The connecting rod (1, 1', 1", 101, 201) according to one of claims 3 to 8, **characterized in that** it further comprises, for the connection of each end-piece (105, 205) to said body (102, 202), at least one annular second sealing gasket or mastic (120, 220) that is mounted in a second groove (105d, 205d) of each end-piece formed axially facing said axial portion (105b, 205b) and the corresponding end of said body, said first sealing gasket (110, 210) and this second sealing gasket or mastic (120, 220) being mounted radially on either side of the body and axially opposite one another, the glue (111, 211) covering both the radially inner and outer faces of the body.

10. The connecting rod (1, 1', 1", 101) according to claims 7 and 9, **characterized in that** for each end-piece (105), said second groove (105d) extends axially from said flared portion (105a) radially inside said axial portion (105b), said second sealing gasket or mastic (120) pressing against a radially inner face of the corresponding end of said body (102).

11. The connecting rod (1, 1', 1", 201) according to claims 8 and 9, **characterized in that** for each end-piece (205), said second groove (205d) extends over said outer axial wall (205c) radially outside said axial portion (205b), said second sealing gasket or mastic (220) pressing against a radially outer face of the corresponding end of said body (202).

12. The connecting rod (1, 101, 201) according to one of claims 1 to 11, **characterized in that** said body (2, 102, 202), which is for example pultruded, is based on at least one ply comprising first fibers primarily parallel to a longitudinal axis of symmetry (X'X) of the body and impregnated with a thermoplastic or thermosetting matrix, and on second wrapping fibers wound in a spiral obliquely around these first fibers, and **in that** each end-piece (5, 6, 105, 205), metal or not, is glued on said body by infusion of a resin on each end-piece.

13. The connecting rod (1', 1") according to one of claims 1 to 11, **characterized in that** said body (2', 2") and said end-pieces (13', 13") are based on at least one thermoplastic material, and **in that** each end-piece is not only glued on the body but also mechanically attached to the latter by permanent deformation of the body radially against each end-piece by crimping (14) able to form an assembly stop for the mechanical junction between each end-piece (13') and the body (2'), which is for example pultruded.

14. The connecting rod (1, 1', 1", 101, 201) according to one of the preceding claims, **characterized in that** each of said heads (3, 3', 103, 203 and 4) comprises a connecting end (7, 8, 7', 7", 107, 207) for connecting to said structures that extends said corresponding end-piece (5, 6, 5', 13', 13", 105, 205) axially toward the outside of the body (2, 2', 2", 102, 202) and that is:
- of the fixed type, the connecting end (7, 8, 107, 207) in the form of a double yoke including two parallel connecting walls (7a and 7b) that are formed in a single piece with the end-piece (5, 6, 105, 205) on either side of the median longitudinal plane of the body (2, 2', 102, 202) and that are respectively provided with opposite orifices (7c) designed to be crossed through by a connecting pin to one of these structures, or
- of the adjustable type, the connecting end (7', 7") including a tubular support (7a', 7a") inserted adjustably in the end-piece (5', 13") and ending with a double yoke with two parallel connecting walls (7b', 7b") on either side of the longitudinal median plane of the body (2, 2"), these walls respectively being provided with opposite orifices (7c', 7c") designed to be crossed through by a connecting pin to one of these structures.

15. An aeronautic floor structure, **characterized in that** it includes at least one connecting rod (1, 1', 1", 101, 201) according to one of the preceding claims.

16. A method for manufacturing a connecting rod (1, 1', 1", 101, 201) according to one of claims 1 to 14, **characterized in that** it comprises the following steps:
a) assembling said at least one first sealing gasket (10, 110, 210) in contact with each of said end-pieces (5, 6, 5', 13', 13", 105, 205) and a first radially inner or outer face of an end zone opposite said body (2, 2', 2", 102, 202), then
b) gluing each end-piece on the body, by injection and suction of a glue (11, 111, 211) radially between the body and each end-piece and axially toward the outside of this first sealing gasket, the glue having a viscosity at 25°C preferably less than 1 Pa.s.

17. The method according to claim 16, **characterized in that** it further comprises, in step a), mounting at least one second sealing gasket or mastic (120, 220) in contact with each end-piece (105, 205) and with a radially outer or inner second face of said body (102, 202) opposite said first face, said first sealing gasket (110, 210) and said second sealing gasket or mastic (120, 220) thus being mounted radially on either side of the body and axially opposite one another facing a globally cylindrical axial portion (105b, 205b) of each end-piece.

18. The method according to claim 16 or 17, **characterized in that** it comprises, before step a), forming by pultrusion of said body (2, 102, 202), which is based on at least one ply of fibers impregnated with a thermoplastic or thermosetting matrix, and **in that** step b) for gluing is implemented by infusion of a resin in contact with each end-piece (5, 6, 5', 105, 205).
